(19) Europäisches Patentamt
European Patent Office
Office européen des brevets

(11) **EP 3 957 183 A1**

(12) **EUROPEAN PATENT APPLICATION**
published in accordance with Art. 153(4) EPC

(43) Date of publication:
**23.02.2022 Bulletin 2022/08**

(21) Application number: **20836367.1**

(22) Date of filing: **24.01.2020**

(51) International Patent Classification (IPC):
**A23L 2/00** (2006.01)        **A23L 2/44** (2006.01)
**A23L 2/38** (2021.01)

(52) Cooperative Patent Classification (CPC):
**A23L 2/00; A23L 2/38; A23L 2/44**

(86) International application number:
**PCT/JP2020/002520**

(87) International publication number:
**WO 2021/005816 (14.01.2021 Gazette 2021/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.07.2019 JP 2019128626**

(71) Applicant: **Asahi Group Holdings, Ltd.
Tokyo 130-8602 (JP)**

(72) Inventors:
• **KUBOTA, Jun
Moriya-shi, Ibaraki 302-0106 (JP)**
• **MAEKAWA, Syotaro
Moriya-shi, Ibaraki 302-0106 (JP)**

(74) Representative: **Müller-Boré & Partner
Patentanwälte PartG mbB
Friedenheimer Brücke 21
80639 München (DE)**

(54) **BEER-FLAVORED BEVERAGE**

(57) An object of the present invention is to provide a beer taste beverage which shows suppressed sourness, robust feeling of drinking and excellent beer-like flavor, while having sufficient bacteriostatic properties to be distributed through the market. The means for solving the problems is a beer taste beverage with an alcohol concentration of less than 1% (v/v), containing 10 mg/100 mL or more of proline, and 11 mg/100 mL or less of amino nitrogen.

EP 3 957 183 A1

**Description**

CROSS-REFERENCE TO RELATED APPLICATION

This application claims benefit under Article 4 of the Paris Convention base on Japanese Patent Application No. 2019-128626 filed in Japan on July 10, 2019, incorporated herein by reference in their entirety.

Technical Field

The present invention relates to a beer taste beverage, and particularly to a beer taste beverage produced through an alcoholic fermentation step and an alcohol-removing step. In the present specification, the term "beer taste beverage" means a beer taste beverage with an alcohol concentration of less than 1% (v/v). That is, the "beer taste beverage" means both a low-alcohol beer taste beverage and a non-alcohol beer taste beverage. Also, the term "alcohol" means ethanol.

In general, the "beer taste beverage" means a beverage having a taste and an aroma reminiscent of beer. "Beer" means a beverage obtained by using as raw materials malt, hops, water and the like, and fermenting these with yeast.

Background Art

Non-alcohol beer taste beverages sometimes be produced without undergoing an alcoholic fermentation process for the purpose of putting the non-alcohol into practice. The flavor of beer, that is a fermented product, is complicated, and that reproducing this by formulating flavoring agents is difficult. Therefore, a non-fermented non-alcohol beer taste beverage has a problem that the beer-like flavor is insufficient.

On the other hand, it has been known a low-alcohol beer which is made by removing alcohol component from ordinary beer. When the alcohol component is removed from beer that is a fermented product, by leaving flavor components that has been produced during an alcoholic fermentation process, it is realized a beer taste beverage having excellent beer-like flavor.

Non-Patent Document 1 describes a thermal process and a membrane process as techniques for completely or partially removing ethanol from ordinary beer. As the thermal process, a vacuum distillation method is described. As the membrane process, a dialysis method and a reverse osmosis method are described.

Patent Document 1 describes a method for producing a low-alcohol beer without impairing the flavor peculiar to beer by extracting and separating the alcohol component contained in ready-made beer. In the method of Patent Document 2, carbon dioxide in supercritical state is used as a solvent for extracting alcohol (Abstract).

Patent Document 2 describes, as one of the non-alcohol beer-like beverages, the one obtained by subjecting beer after fermentation to an alcohol-removing treatment to remove alcohol component. In such non-alcohol beer-like beverages, the beer-like flavor is slightly felt in terms of the sensory aspect, but there is a problem that the overall aroma components are reduced, that sweetness is also less in taste, and that the richness and sharpness are insufficient (paragraph [0003]). In Patent Document 2, the problem is solved by adding predetermined amounts of malt extract and saccharide (claim 1).

As a result of alcohol-removal, these beer taste beverages has been reduced in bacteriostatic properties. Therefore, from the viewpoint of preventing spoilage for distribution on the market, it is necessary to lower the pH of beer taste beverages to improve the bacteriostatic properties. For example, refer to the Standards for Foods and Additives (Ministry of Health and Welfare Notification No. 370, 1959, https://www.mhlw.go.jp/content/000420821.pdf).

The pH adjusting agents such as an acid is added to the beer taste beverage for the purpose of that the pH is sufficiently lowered to improve the bacteriostatic properties. Here, the wort generally contains amino nitrogen derived from barley as a raw material, that is, the nitrogen of an amino group and an imino group. Amino nitrogen can combine with hydrogen ion, and it exert the function of not increasing the hydrogen ion concentration even when an acid is added. Therefore, it becomes necessary that a relatively large amount of acids is added in order to sufficiently lower the pH of a non-fermented beer taste beverage using wort. As a result, the beer taste beverage having a sufficiently lowered pH has enhanced sourness, disrupted balance between sourness and sweetness, and poor palatability.

Prior Art Documents

Patent Documents

Patent Document 1: JP 2004-215551 A
Patent Document 2: JP 2003-250503 A

Non-Patent Document

Non-Patent Document 1: Tomas Branyik et al, "A review of methods of low alcohol and alcohol-free beer production", Journal of Food Engineering, No. 108, 2012, pages 493-506

Summary of Invention

Problems to be solved by the Invention

The amount of amino nitrogen contained in beer may be reduced, for example, by reducing the use ratio of malt as a raw material. When the amino nitrogen content in a beer taste beverage is low, only a small amount of acids is required to sufficiently lower the pH. In that case, the sourness of the beer taste beverage is not so enhanced that the balance between sourness and sweetness is disrupted. On the other hand, when the amino nitrogen content is reduced as a whole, the robust feeling of drinking of the beer taste beverage is reduced.
The present invention solves the above-mentioned problems, and an object thereof is to provide a beer taste beverage which shows suppressed sourness, robust feeling of drinking and excellent beer-like flavor, while having sufficient bacteriostatic properties to be distributed through the market.

Means for Solving the Problem

The present invention provides a beer taste beverage with an alcohol concentration of less than 1% (v/v), containing 10 mg/100 mL or more of proline, and 11 mg/100 mL or less of amino nitrogen.
In one embodiment, the beer taste beverage contains a pH adjusting agent.
In one embodiment, the beer taste beverage contains a component derived from a wort fermented liquid.
In one embodiment, the component derived from the wort fermented liquid is a component of an alcohol-removed wort fermented liquid.
In one embodiment, the wort fermented liquid is a wort top-fermented liquid.
In one embodiment, the beer taste beverage has a pH of less than 4.2.
In one embodiment, the pH adjusting agent is at least one selected from the group consisting of phytic acid, lactic acid, lactic acid bacteria, phosphoric acid, malic acid, sulfurous anhydride and tartaric acid.
In one embodiment, the beer taste beverage has a genuine extract component of 1.75% (w/w) or more and 8.00% (w/w) or less.
Also, the present invention provides a method for producing a beer taste beverage, comprising a step of reducing the alcohol concentration to less than 1% (v/v) by removing alcohol from a beer taste beverage intermediate liquid containing 10 mg/100 mL or more of proline, 11 mg/100 mL or less of amino nitrogen, and alcohol.
In one embodiment, the method for producing a beer taste beverage comprises a step of adding a pH adjusting agent to the beer-taste beverage intermediate liquid.
In one embodiment, the beer taste beverage intermediate liquid is a wort fermented liquid.
In one embodiment, the wort fermented liquid is a wort top-fermented liquid.

Effect of the Invention

The beer taste beverage of the present invention shows good balance between sourness and sweetness, robust feeling of drinking, and excellent beer-like flavor, while having sufficient bacteriostatic properties to be distributed to the market.

Description of Embodiments

The beer taste beverage of the present invention is produced by adjusting the proline concentration, amino nitrogen concentration, pH, alcohol content, and the like of any of intermediate liquids, which is produced at an intermediate stage of the process usually carried out when producing a beer taste beverage (hereinafter referred to as a "beer-taste intermediate liquid"), to a specific range.
For example, by first, crushed malt, auxiliary raw materials such as barley, and warm water are placed into a preparation tank and mixed to prepare maische. The preparation of the maische may be performed by a conventional method. For example, first, by holding at 35 to 60°C for 20 to 90 minutes, proteins derived from raw materials is decomposed into amino acids and the like, and then, a saccharifying step is conducted. At this stage, as necessary, enzyme agents, as mentioned below, such as a saccharifying enzyme and a protease, and flavor components such as spices and herbs, and the like may be added other than the main raw materials and the auxiliary raw materials.

Then, by gradually raising the temperature of the maische and holding it at a predetermined temperature for a certain period of time, starchy component is saccharified by utilizing an enzyme derived from malt or an enzyme added to the maische. The temperature and time during the saccharifying treatment may be appropriately determined in consideration of the type of enzyme used, the amount of maische, the quality of the intended wort fermented liquid, and the like, which may be carried out by holding it, for example, at 60 to 72°C for 30 to 90 minutes. After the saccharifying treatment, the maische is held at 76 to 78°C for about 10 minutes, and then filtered in a wort filtration tank to obtain a transparent saccharide liquid. Further, when performing the saccharifying treatment, an appropriate amount of the enzyme agent may be added within a necessary range.

Cereals to be saccharified contain malt. The malt content in cereals to be saccharified is not particularly limited, but is 25% or more, preferably 50% or more, and more preferably 67% or more. The cereals to be saccharified may be 100% malt. The ratio (%) of malt to all raw materials excluding water is referred to as a malt use ratio.

The higher the malt content in the cereals, the stronger the malt-derived umami, richness and robust feeling of drinking of the obtained wort, and the proline content in the wort increases. Further, the higher the malt content in the cereals, the higher the amino nitrogen content in the obtained wort.

Auxiliary raw materials mean raw materials other than malt and hops. Examples of the auxiliary raw materials are starchy raw materials such as barley, wheat, corn starch, corn grits, rice, and Kaoliang, and saccharide raw materials such as liquid sugar and sugar. Here, the liquid sugar is produced by decomposing and saccharifying starchy component with an acid or a saccharifying enzyme, and mainly contains glucose, maltose, maltotriose and the like. In addition, spices, herbs, fruits and the like used for the purpose of imparting or improving flavor are also included in the auxiliary raw materials.

The saccharifying enzyme means an enzyme for decomposing starchy component into saccharide. As the saccharifying enzyme, there are, for example, $\alpha$-amylase, glucoamylase, pullanase and the like.

Wort boiling operation may be carried out according to the method and conditions which are commonly carried out when producing beer. For example, a saccharide liquid, the pH of which has been adjusted, is transferred to a boiling kettle, and boiled. During the time from the start of boiling of the saccharide liquid until being left to stand, hops are added in the whirlpool. Hop extract or a component extracted from hops may be used as the hops. The saccharide liquid is then transferred to a precipitation tank called a whirlpool. After hop lees and curdled protein, produced by boiling are removed, the resulting liquid is cooled to an appropriate fermentation temperature by a plate cooler. Wort is obtained by the above wort boiling operation.

The obtained wort is fermented by yeast. Fermentation of wort may be carried out according to a conventional method. For example, beer yeast is inoculated into the cooled wort, and the wort is transferred to a fermentation tank to carry out alcoholic fermentation. The type of beer yeast is not particularly limited, and both top-fermenting yeast and bottom-fermenting yeast may be used. Specifically, *Saccharomyces cerevisiae* and *Saccharomyces pastorianus* and the like may be used. The top-fermenting yeast and the bottom-fermenting yeast are appropriately selected depending on the composition and flavors of the intended wort fermented liquid.

In the present specification, a wort fermented liquid fermented using top-fermenting yeast is referred to as a wort top-fermented liquid. A wort fermented liquid fermented using bottom-fermenting yeast is referred to as a wort bottom-fermented liquid.

When wort is fermented using top-fermenting yeast, the extract consumption per unit time is higher than that using bottom-fermenting yeast, so that the time required for fermentation is shortened. In addition, when wort is fermented using top-fermenting yeast, a wort fermented liquid having a low pH is obtained because the amino nitrogen consumption is relatively high. As a result, the desired low pH may be provided without performing a step of lowering the pH.

The apparent final degree of fermentation of the wort fermented liquid is preferably 80% or more. If the apparent final degree of fermentation is less than 80%, amino nitrogen is not sufficiently reduced, and a large amount of acids may need to be added in order to sufficiently lower the pH of the wort fermented liquid. The apparent final degree of fermentation of the wort fermented liquid is preferably 80 to 110%, and more preferably 85 to 100%.

The degree of fermentation is an important index which indicates to what extent fermentation has progressed in beer after fermentation, i.e., the progress of fermentation. Further, the final degree of fermentation means the ratio of the extract that can be assimilated by beer yeast based on the raw wort extract. Here, the extract that can be assimilated by beer yeast is what is obtained by subtracting an extract contained in the produced beer (that is, an extract remaining after fermenting all the extracts that can be used by beer yeast (referred to as a final extract) from the raw wort extract. The apparent final degree of fermentation means the final degree of fermentation which is calculated by using, as the value of final extract, the apparent extract, that is, the extract concentration (% (w/w)) derived from the specific gravity of alcohol-containing beer.

The extract means the non-volatile solid component. The term extract means the non-volatile solid component itself, the amount of the non-volatile solid component, or the concentration of the non-volatile solid component depending on the context.

The apparent final degree of fermentation Vend of a wort fermented liquid may be obtained by, for example, the following formula (1).

$$Vend\ (\%)\ =\ \{(P-End)/P\}\ x\ 100 \qquad (1)$$

wherein P is a raw wort extract and Eend is an apparent final extract.

The raw wort extract P is the theoretical wort extract value before alcoholic fermentation, which is back calculated from the alcohol concentration and the extract value of produced beer according to Balling's formula. Specifically, it may be obtained by the method shown in Analytica-EBC (9.4) (2007). In addition, the apparent final extract Eend may be determined by collecting beer in a flask, adding a large amount of fresh pressed yeast, fermenting the mixture at 25°C while stirring until the extract value does not decrease any more (24 hours), and measuring the apparent extract value in the remaining beer.

The apparent final extract Eend may show a negative value because it is calculated from the alcohol-containing specific density of the final extract. As a result, the apparent final degree of fermentation may exceed 100%.

The apparent final degree of fermentation may be controlled by adjusting, for example, the saccharifying conditions, whether or not the enzyme is used when saccharifying the raw material, the type and blending amount of the raw material, and the like. For example, if the saccharifying time is increased, the concentration of saccharide which can be used by yeast may be increased, and the apparent final degree of fermentation may be increased.

After completion of the fermentation, furthermore, the obtained wort fermented liquid is matured as a maturing process in a liquor storage tank, stored under a low temperature condition of about 0°C, and stabilized. Next, as a filtration step, yeast, proteins and the like are removed by filtering the wort fermented liquid after maturation.

The obtained wort fermented liquid contains 10 mg/100 mL or more of proline. If the proline content is less than 10 mg/100 mL, the robust feeling of drinking of the obtained beer taste beverage can be reduced. The proline content is preferably 15 to 45 mg/100 mL, and more preferably 20 to 35 mg/100 mL.

The proline content of the wort fermented liquid may be measured, for example, by the AccQ-Tag Ultra labeling method using an Acquity UPLC analyzer manufactured by Waters Corporation (USA). It may also be measured using an automatic amino acid analyzer L-8800A manufactured by Hitachi, Ltd.

The obtained wort fermented liquid has a genuine extract component of 1.75 to 8.00% (w/w). If the content of the genuine extract component is less than 1.75% (w/w), the beer-like flavor of the obtained beer taste beverage can disappear and watery feeling can arise. On the other hand, if the content of the genuine extract component exceeds 8.00% (w/w), the beer-like sharpness of the obtained beer taste beverage can become weak. The content of the genuine extract component is preferably 2.50 to 5.50% (w/w), and more preferably 3.00 to 5.00% (w/w).

The genuine extract component content of the wort fermented liquid may be measured by, for example, the EBC method (BCOJ Beer Analysis Method, 7.2 (2004), edited by the Beer Brewery Association).

From the wort fermented liquid, from which yeast, protein and the like have been removed, carbon dioxide gas contained therein is removed as necessary. In addition, the wort fermented liquid is subjected to an alcohol-removing step to remove alcohol contained therein. The alcohol-removing step is carried out until the alcohol content of the wort fermented liquid is, for example, less than 1% (v/v), preferably less than 0.5% (v/v), and more preferably less than 0.1% (v/v). The alcohol-removing step is carried out using a conventionally known method. For example, a vacuum distillation method may be used. In this case, it is preferred to employ a method in which flavor components produced in the alcoholic fermentation process are allowed to remain therein.

A pH adjusting agent is added to the wort fermented liquid to lower the pH as necessary. By sufficiently lowering the pH, bacteriostatic properties required for marketing the beverage is imparted, and the beer taste beverage of the present invention is obtained. The beer taste beverage of the present invention may have a low pH to such an extent that the spoilage prevention effect is obtained. The specific upper limit of the pH is less than 4.2, preferably less than 4.1, and more preferably less than 4.0. On the other hand, the specific lower limit of the pH is 3.0 or more, preferably 3.3 or more, and more preferably 3.6 or more.

The obtained wort fermented liquid contains 11 mg/100 mL or less of amino nitrogen. If the amino nitrogen content exceeds 11 mg/100 mL, it is necessary to add a large amount of acids to lower the pH, and the sourness of the obtained beer taste beverage can become too strong. The amino nitrogen content is preferably 1 to 10 mg/100 mL, and more preferably 2 to 5 mg/100 mL.

The amino nitrogen content in the wort fermented liquid may be measured, for example, by the ninhydrin colorimetric method (BCOJ Beer Analysis Method, 8.18 (2004), edited by the Beer Brewery Association).

The types of pH adjusting agents are not limited. Acids, which are food additives and which may be used for beverages, foods or production process thereof, salts thereof, and beer raw materials having pH lowering ability may be used as the pH adjusting agents. Examples of the beer raw materials having a pH lowering ability include sour malt, dark malt and the liike. Preferred pH adjusting agents are phytic acid, citric acid, lactic acid, lactic acid bacteria, phosphoric acid, malic acid, sulfurous anhydride, tartaric acid, gluconic acid, acetic acid, succinic acid, adipic acid, itaconic acid, fumaric acid and combinations thereof. More preferred pH adjustors are phytic acid, lactic acid, lactic acid bacteria, phosphoric acid, malic acid, sulfurous anhydride, tartaric acid and combinations thereof. Considering the effect on the flavor of beer taste beverages, phytic acid, which has less sourness among these, is most preferred.

To the beer taste beverage, a bitter substance is added as necessary to adjust the bitterness value. Isolated iso-$\alpha$ acids may be used as the bitter substance. The iso-$\alpha$ acids are contained in hops, and it may also be employed as hops or a hop extract. The hops or hop extract means hop leaves, a ground product thereof, an extraction liquid obtained by extracting these with water or boiling water, a concentrate and a dried product of the extraction liquid.

The bitterness value of beer taste beverages is adjusted to have a bitterness equivalent to beer. Specifically, the bitterness value of the beer taste beverage is adjusted to 5 to 100 BU, preferably 10 to 35 BU, and more preferably 15 to 27 BU. The bitterness value of beer taste beverages may be measured by the method described in BCOJ Beer Analysis Method, 8.15 (2004), edited by the Beer Brewery Association.

To the wort fermented liquid, carbon dioxide gas is added by a carbonation step. This results in obtaining the beer taste beverage of the present invention. The amount of carbon dioxide added is adjusted so as to have the same foaming property as beer. Specifically, the amount of carbon dioxide added is adjusted so as to be 1.2 to 5.0 gas volumes, preferably 2.4 to 3.5 gas volumes, and more preferably 2.6 to 3.2 gas volumes.

The beer taste beverage of the present invention contains 10 mg/100 mL or more, preferably 15 to 45 mg/100 mL, and more preferably 20 to 35 mg/100 mL of proline. The proline content of the beer taste beverage may be measured by the method described for the wort fermented liquid.

The beer taste beverage of the present invention contains 11 mg/100 mL or less, preferably 1 to 10 mg/100 mL, and more preferably 2 to 5 mg/100 mL of amino nitrogen. The amino nitrogen content of the beer. taste beverage may be measured by the method described for the wort fermented liquid.

The beer taste beverage of the present invention has a genuine extract component of 1.75 to 8.00% (w/w), preferably 2.50 to 5.50% (w/w), and more preferably 3.00 to 5.00% (w/w). The genuine extract component of a beer taste beverage may be measured by the method described for the wort fermented liquid.

The present invention will be described in more detail with reference to the following examples, but the present invention is not limited to these.

[Examples]

<Example 1>

Crushed malt, corn starch, and warm water were put in a preparation kettle, gelatinized at 70°C, and liquefied at 100°C. Next, crushed malt and warm water were put in a preparation tank, protein was decomposed at around 55°C, and then the liquid was transferred from the preparation kettle to the preparation tank. After warm water and an enzyme were put therein, saccharifying was performed at a temperature in the range of 60 to 76°C. This saccharified liquid was filtered with a lauter that was a filter tank, then transferred to a boiling kettle, hops were added, and boiled for 60 minutes. After boiling, warm water equivalent to the evaporated component was added, hot trub was removed in a whirlpool tank, followed by cooling to 8°C using a plate cooler to obtain cold wort. This cold wort served as wort A.

Beer yeast (bottom-fermenting yeast) was added to this wort A to ferment it at around 10°C for 7 days, and then the beer yeast (bottom-fermenting yeast) was removed. The tank was changed and the resulting wort was matured for 7 days, then cooled to around -1°C and stabilized for 14 days. Then, gas-removed water was added to dilute the raw wort extract to 10.0%, followed by filtration using diatomaceous earth to obtain a fermented liquid.

Next, the obtained fermented liquid was sprayed into a gas-removing tank under a reduced pressure of about 90 mbar to remove carbon dioxide, and then heated to about 50°C using a plate cooler. Thereafter, it was brought into contact with water vapor heated to around 50°C in a column at a reduced pressure of around 90 mbar to adsorb volatile components to the water vapor so that alcohol and volatile components were removed, thereby obtaining an alcohol-removed fermented liquid with an alcohol concentration of 0.02% (v/v).

Phytic acid was added as a pH adjusting agent to this alcohol-removed fermented liquid to adjust the pH to 3.9. Further, an iso-$\alpha$ hop extract was added so that the bitterness value was 17 BU, and carbon dioxide gas was dissolved so as to be 2.9 gas volumes thereby obtaining a fermented beer taste beverage. This fermented beer taste beverage served as Test Liquid A.

A fermented beer taste beverage served as Test Liquid B was prepared according to the above method, except that the formulation, in which the preparation conditions were changed, was employed. A fermented beer taste beverage served as Test Liquid C was prepared according to the above method, except that the formulation in which the malt use ratio was changed, was employed.

On the other hand, phytic acid was added as a pH adjusting agent to wort A to adjust the pH to 3.9. Further, gas-removed water was added thereto so as to adjust the raw wort extract to 10.0%, and then carbon dioxide gas was dissolved so as to be 2.9 gas volumes, thereby obtaining a non-fermented malt beer taste beverage. This non-fermented malt beer taste beverage served as Test Liquid D.

A non-fermented malt beer taste beverage served as Test Liquid E was prepared according to the above method, except that the formulation in which the malt use ratio was changed, was employed.

These Test Liquids A to E were subjected to sensory evaluation. The sensory evaluation was conducted by 10 trained panelists specialized in beer. They scored the robust feeling of drinking, intensity of sourness, and beer-like flavor according to the criteria described below.

The "robust feeling of drinking" was defined as catchiness when swallowing a liquid. Asahi Super Dry (manufactured by Asahi Breweries, Ltd.) was given 5 points, and water was given 1 point, scored on a 5-levels scale. Regarding the "intensity of sourness", Test Liquid E was given 5 points, and water was given 1 point, scored on a 5-levels scale. Regarding the "beer-like flavor", Asahi Super Dry (manufactured by Asahi Breweries, Ltd.) was given 5 points, and Test Liquid D was given 1 point, scored on a 5-levels scale.

The score for each item was calculated by averaging the scores of all panelists. Regarding "palatability", when both "robust feeling of drinking" and "beer-like flavor" have a score of 3.0 or higher, and "intensity of sourness" has a score of 4.0 or lower, it was rated as "A" and the others were rated as "B". The results of the sensory evaluation are shown in Table 1.

<Example 2>

Crushed malt, warm water, and an enzyme were put in a preparation tank, protein was decomposed at around 55°C, and then saccharifying was performed at a temperature in the range of 60 to 76°C. This saccharified liquid was filtered with a lauter that was a filter tank, then transferred to a boiling kettle, and hops were added, and boiled for 60 minutes. After boiling, warm water equivalent to the evaporated component was added, hot trub was removed in a whirlpool tank, followed by being cooling to 15°C using a plate cooler to obtain cold wort. This cold wort served as wort B.

Beer yeast (top-fermenting yeast) was added to this wort B and fermented at around 18°C for 3 days, and then the beer yeast (top-fermenting yeast) was removed. The tank was changed and matured for 7 days, then cooled to around -1°C and stabilized for 14 days. Then, gas-removed water was added to dilute the raw wort extract to 10.0%, followed by filtration using diatomaceous earth to obtain a fermented liquid.

Next, the obtained fermented liquid was sprayed into a gas-removing tank under a reduced pressure of about 90 mbar to remove carbon dioxide, and then heated to about 50°C using a plate cooler. Thereafter, it was brought into contact with water vapor heated to around 50°C in a column at a reduced pressure of around 90 mbar to adsorb volatile components to the water vapor so that alcohol and volatile components were removed, thereby obtaining an alcohol-removed fermented liquid with an alcohol concentration of 0.02% (v/v).

An iso-$\alpha$ hop extract was added to this alcohol-removed fermented liquid so that the bitterness value was 17 BU, and carbon dioxide gas was dissolved so as to be 2.9 gas volumes thereby obtaining a fermented beer taste beverage. This fermented beer taste beverage served as Test Liquid F.

This Test Liquid F was subjected to sensory evaluation according to the same manner as in Example 1. The results of the sensory evaluation are shown in Table 1.

[Table 1]

| Item | | Test Liquid A | Test Liquid B | Test Liquid C | Test Liquid D | Test Liquid E | Test Liquid F |
|---|---|---|---|---|---|---|---|
| Analytical value and the like | Proline concentration (mg/100 mL) | 30.3 | 30.0 | 35.0 | 30.4 | 23.5 | 35.2 |
| | pH | 3.9 | 3.9 | 3.9 | 3.9 | 3.9 | 4.1 |
| | Alcohol concentration (% (v/v)) | 0.0 | 0.0 | 0.0 | 0.0 | 0.0 | 0.0 |
| | Amino nitrogen concentration (mg/100 mL) | 3.6 | 7.6 | 10.2 | 12.7 | 14.3 | 3.5 |
| | Bitterness value (BU) | 17 | 17 | 17 | 17 | 17 | 17 |
| | Amount of phytic acid added (mg/100 mL) | 16.4 | 59.7 | 66.8 | 115.8 | 147.8 | 0 |
| | Genuine extract component (% (w/w)) | 3.10 | 4.10 | 6.89 | 10.00 | 13.83 | 3.22 |
| Sensory evaluation | Robust feeling of drinking | 4.8 | 4.8 | 4.9 | 4.0 | 5.0 | 4.8 |
| | Intensity of sourness | 3.5 | 4.0 | 4.0 | 5.0 | 5.0 | 3.5 |
| | Beer-like flavor | 4.5 | 3.0 | 3.0 | 1.0 | 2.0 | 4.4 |
| | Palatability | A | A | A | B | B | A |

<Example 3>

After mixing 15 g of dextrin, 0.04 g of acesulfame potassium, 0.3 g of caramel, and 0.7 g of phosphoric acid in 1L of water, an isomerized hop extract was added so that the bitterness value was 17 BU, thereby obtaining a non-fermented beer taste beverage containing no alcohol. This non-fermented beer taste beverage served as Test Liquid G.

Test Liquid G had a proline concentration of 0 mg/100 mL, a pH of 3.9, an alcohol concentration of 0.0% (v/v), an amino nitrogen concentration of 0.1 to 0.2 mg/100 mL, and a bitterness value of 17 BU.

Next, Test Liquid A used in Example 1 and Test Liquid G were mixed so as to have proline concentrations shown in Table 2, and the obtained beer taste beverages served as Test Liquids H to K respectively. Test Liquids H to K were each cooled to 5°C, and carbon dioxide gas was dissolved so as to be 2.9 gas volumes.

These Test Liquids A to E were subjected to sensory evaluation. The sensory evaluation was conducted by 10 trained panelists specialized in beer. They scored the robust feeling of drinking, intensity of sourness, and beer-like flavor according to the criteria of Example 1. The results of the sensory evaluation were shown in Table 2.

[Table 2]

| Item | | Test Liquid H | Test Liquid I | Test Liquid J | Test Liquid K |
|---|---|---|---|---|---|
| Analytical value and the like | Proline concentration (mg/100 mL) | 5 | 10 | 15 | 20 |
| | pH | 3.9 | 3.9 | 3.9 | 3.9 |
| | Alcohol concentration (% (v/v)) | 0.0 | 0.0 | 0.0 | 0.0 |
| | Amino nitrogen concentration (mg/ 100 mL) | 0.6 | 1.2 | 1.8 | 2.4 |
| | Bitterness value (BU) | 17 | 17 | 17 | 17 |
| | Amount of phytic acid added (mg/ 100 mL) | 2.7 | 5.5 | 8.2 | 10.9 |
| | Genuine extract component (% (w/w)) | 1.69 | 1.88 | 2.07 | 2.27 |
| Sensory evaluation | Robust feeling of drinking | 2.5 | 4.0 | 4.5 | 4.5 |
| | Intensity of sourness | 3.0 | 3.0 | 3.0 | 3.0 |
| | Beer-like flavor | 4.0 | 4.0 | 4.0 | 4.0 |
| | Palatability | B | A | A | A |

## Claims

1. A beer taste beverage with an alcohol concentration of less than 1% (v/v), containing 10 mg/100 mL or more of proline, and 11 mg/100 mL or less of amino nitrogen.

2. The beer taste beverage according to claim 1 containing a pH adjusting agent.

3. The beer taste beverage according to claim 1 or 2 containing a component derived from a wort fermented liquid.

4. The beer taste beverage according to claim 3, wherein the component derived from the wort fermented liquid is a component of an alcohol-removed wort fermented liquid.

5. The beer taste beverage according to claim 3 or 4, wherein the wort fermented liquid is a wort top-fermented liquid.

6. The beer taste beverage according to any one of claims 1 to 5 having a pH of less than 4.2.

7. The beer taste beverage according to any one of claims 2 to 6, wherein the pH adjusting agent is at least one selected from the group consisting of phytic acid, lactic acid bacteria, lactic acid, phosphoric acid, malic acid, sulfurous anhydride and tartaric acid.

8. The beer taste beverage according to any one of claims 1 to 7 having a genuine extract component of 1.75% (w/w) or more and 8.00% (w/w) or less.

9. A method for producing a beer taste beverage, comprising a step of reducing the alcohol concentration to less than 1% (v/v) by removing alcohol from a beer taste beverage intermediate liquid containing 10 mg/100 mL or more of proline, 11 mg/100 mL or less of amino nitrogen, and alcohol.

10. The method according to claim 9, comprising a step of including a pH adjusting agent in the beer taste beverage intermediate liquid.

11. The method according to claim 9 or 10, wherein the beer taste beverage intermediate liquid is a wort fermented liquid.

12. The method according to claim 11, wherein the wort fermented liquid is a wort top-fermented liquid.

## INTERNATIONAL SEARCH REPORT

| | International application No. |
|---|---|
| | PCT/JP2020/002520 |

**A. CLASSIFICATION OF SUBJECT MATTER**
Int.Cl. A23L2/00(2006.01)i, A23L2/44(2006.01)i, A23L2/38(2006.01)i
FI: A23L2/00P, A23L2/00B, A23L2/38S, A23L2/44

According to International Patent Classification (IPC) or to both national classification and IPC

**B. FIELDS SEARCHED**

Minimum documentation searched (classification system followed by classification symbols)
Int.Cl. A23L2/00, A23L2/44, A23L2/38

Documentation searched other than minimum documentation to the extent that such documents are included in the fields searched
Published examined utility model applications of Japan    1922–1996
Published unexamined utility model applications of Japan  1971–2020
Registered utility model specifications of Japan          1996–2020
Published registered utility model applications of Japan  1994–2020

Electronic data base consulted during the international search (name of data base and, where practicable, search terms used)
JSTPlus/JMEDPlus/JST7580(JDreamIII), CAplus(STN), FSTA(STN)

**C. DOCUMENTS CONSIDERED TO BE RELEVANT**

| Category* | Citation of document, with indication, where appropriate, of the relevant passages | Relevant to claim No. |
|---|---|---|
| X | JP 2019-103440 A (ASAHI BREWERIES LTD.) 27.06.2019 | 1, 3-5, 8, 9, 11 |
| Y | (2019-06-27), claims, paragraph [0010], examples 1-3 | 1-11 |
| Y | WO 2006/022250 A1 (SUNTORY LTD.) 02.03.2006 (2006-03-02), claims, examples | 1-11 |
| Y | JP 2016-144409 A (KIRIN CO., LTD.) 12.08.2016 (2016-08-12), claims, examples, paragraph [0020] | 1-11 |
| P, X | WO 2019/138631 A1 (ASAHI BREWERIES LTD.) 18.07.2019 (2019-07-18), claims, example 4 | 1-11 |
| A | 伊藤 博，食品加工におけるアミノ態窒素の分析，食品と科学, 1992, vol. 34, no. 6, pp. 85-90, entire text, (ITO, Hiroshi, Analysis of amino nitrogen in food processing, Food Science) | 1-11 |

☒ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27.02.2020 | 10.03.2020 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2020/002520

C (Continuation). DOCUMENTS CONSIDERED TO BE RELEVANT

| Category* | Citation of document, with indication, where appropriate, of the relevant passages | Relevant to claim No. |
|---|---|---|
| A | 11. 製品ビール，ビール醸造技術，株式会社食品産業新聞社，2009 (received date), pp. 351-358, entire text, (SHOKUHIN SANGYO SHIMBUNSHA CO., LTD.), non-official translation (11. Product beer, Beer brewing technology) | 1-11 |
| A | WO 2014/156735 A1 (ASAHI BREWERIES LTD.) 02.10.2014 (2014-10-02), entire text | 1-11 |
| A | WO 2004/041992 A1 (SUNTORY LTD.) 21.05.2004 (2004-05-21), entire text | 1-11 |
| A | WO 2008/156051 A1 (SUNTORY HOLDINGS LTD.) 24.12.2008 (2008-12-24), entire text | 1-11 |
| A | JP 2017-118824 A (ASAHI BREWERIES LTD.) 06.07.2017 (2017-07-06), entire text | 1-11 |

Form PCT/ISA/210 (second sheet) (January 2015)

| INTERNATIONAL SEARCH REPORT | International application No. |
|---|---|
| Information on patent family members | PCT/JP2020/002520 |

```
JP 2019-103440 A   27.06.2019   (Family: none)

WO 2006/022250 A1 02.03.2006     US 2008/0175950 A1
                                 claims, examples
                                 WO 2006/022250 A1
                                 EP 1816186 A1
                                 CN 101014696 A
                                 KR 10-2007-0050082 A

JP 2016-144409 A   12.08.2016   (Family: none)

WO 2019/138631 A1 18.07.2019    (Family: none)

WO 2014/156735 A1 02.10.2014    (Family: none)

WO 2004/041992 A1 21.05.2004     US 2006/0051459 A1
                                 entire text
                                 WO 2004/041992 A1
                                 EP 1568763 A1
                                 KR 10-2005-0086433 A
                                 CN 1717473 A

WO 2008/156051 A1 24.12.2008    (Family: none)

JP 2017-118824 A   06.07.2017   (Family: none)
```

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019128626 A
- JP 2004215551 A
- JP 2003250503 A

**Non-patent literature cited in the description**

- **TOMAS BRANYIK et al.** A review of methods of low alcohol and alcohol-free beer production. *Journal of Food Engineering,* 2012, (108), 493-506
- BCOJ Beer Analysis Method. 2004, vol. 7, 2
- BCOJ Beer Analysis Method. 2004, vol. 8, 18
- BCOJ Beer Analysis Method. 2004, vol. 8, 15